(19) Europäisches Patentamt
European Patent Office
Office européen des brevets

(11) **EP 3 205 548 B1**

(12) **FASCICULE DE BREVET EUROPEEN**

(45) Date de publication et mention
de la délivrance du brevet:
**28.07.2021   Bulletin 2021/30**

(51) Int Cl.:
***B61F 5/24*** *(2006.01)*

(21) Numéro de dépôt: **17155464.5**

(22) Date de dépôt: **09.02.2017**

(54) **PROCÉDÉ D'OPTIMISATION DU CONFORT DANS UN VÉHICULE FERROVIAIRE**

VERFAHREN ZUM OPTIMIEREN DES KOMFORTS EINES SCHIENENFAHRZEUGS

A METHOD FOR OPTIMIZING PASSENGER COMFORT IN A RAILWAY VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:   **09.02.2016   FR 1650996**

(43) Date de publication de la demande:
**16.08.2017   Bulletin 2017/33**

(73) Titulaire: **ALSTOM Transport Technologies
93400 Saint-Ouen (FR)**

(72) Inventeur: **HALLONET, Frédéric
17220 LA JARNE (FR)**

(74) Mandataire: **Lavoix
2, place d'Estienne d'Orves
75441 Paris Cedex 09 (FR)**

(56) Documents cités:
**WO-A1-2015/019002      FR-A1- 2 741 027
JP-A- 2003 237 573      KR-B1- 101 082 764**

**Description**

La présente invention concerne un procédé d'optimisation, en continu tout au long de la vie du matériel, du confort dans un véhicule ferroviaire circulant sur une voie ferrée.

Un procédé d'optimisation du confort est connu du document JP 2003 237573 A.

Le confort dans un véhicule ferroviaire dépend particulièrement de trois variables principales, qui sont la vitesse du véhicule, l'état de la voie ferrée, et la charge portée par le véhicule.

Afin d'améliorer ce confort, les véhicules ferroviaires comportent classiquement au moins un système de suspension, intercalé entre les roues et la caisse du véhicule.

On appelle « système de suspension », un ensemble d'éléments contribuant à contrôler les mouvements relatifs de la caisse par rapport aux châssis de bogies portant cette caisse, et des châssis de bogies par rapport aux essieux de ces bogies. Ces éléments peuvent être vus indépendamment d'un véhicule à l'autre dans une rame de train ou tramway.

Plus particulièrement, il existe des systèmes de suspension de raideurs constantes, ces raideurs étant choisies de sorte que le système de suspension soit efficace sur les tronçons de voie comprenant des singularités préjudiciables pour le confort. Toutefois, de telles raideurs ne sont pas adaptées aux autres tronçons de voie, et peuvent donc être inconfortables sur ces autres tronçons de voie. L'inadéquation des ces raideurs génère de l'inconfort pour les passagers et des sollicitations mécaniques néfastes pour la durée de vie en fatigue des matériels (voies, bogies, et structures de caisse).

Il existe également des systèmes de suspension dits « actifs », dont la raideur peut être commandée afin d'être adaptée à diverses conditions de circulation du véhicule. Toutefois, la commande de tels systèmes de suspension est généralement basique, étant par exemple seulement fonction de la vitesse du véhicule.

L'invention a notamment pour but d'améliorer la situation, en proposant un procédé d'optimisation du confort dans un véhicule ferroviaire, propre à optimiser, en continu, un système de suspension actif.

A cet effet, l'invention a notamment pour objet un procédé d'optimisation selon la revendication 1.

Le procédé selon l'invention permet d'optimiser tous les paramètres de réglage du système de suspension.

Il est à noter que ces paramètres de réglage ne peuvent pas être déduits par un simple calcul en fonction de variables d'entrée, un tel calcul étant trop complexe étant donné la grande variété de variables d'entrée, notamment la variabilité des voies dans le temps, la charge effective du véhicule, la vitesse instantanée, l'usure des roues, etc.

L'invention prévoit donc de déterminer les paramètres de réglage optimisés en réalisant des campagnes d'optimisation, en déterminant les paramètres de réglage utilisés à chaque campagne au moyen d'un algorithme métaheuristique.

On appelle ici « campagne d'optimisation », l'accumulation suffisante de données de confort relativement à des jeux de paramètres de réglage de suspension, par des circulations sur un tronçon donné pour une plage de vitesse et une plage de charge données. Cette accumulation de données permet à l'algorithme de déduire des jeux de paramètres théoriquement plus favorables au confort, jeux qui seront évalués lors de la campagne suivante.

En itérant les campagnes d'optimisation un nombre suffisant de fois, les paramètres de réglage convergent vers des valeurs optimales et sont par exemple renseignés dans une base de donnée. Cette base de données pourra ainsi indiquer, via un algorithme, les paramètres de réglage optimaux pour des variables données. La base de données conserve l'historique des jeux testés ainsi que les optimum. Ainsi, le procédé selon l'invention est de type « machine learning ».

Un procédé selon l'invention peut comporter en outre l'une ou plusieurs des caractéristiques suivantes, prises seules ou selon toutes combinaisons techniquement envisageables.

- Les paramètres des premiers jeux de paramètres sont choisis dans des intervalles de sécurité respectifs prédéterminés.
- Les paramètres des premiers jeux de paramètres sont déterminés aléatoirement.
- L'algorithme métaheuristique est un algorithme génétique.
- Le découpage de la voie ferrée en tronçons est adaptatif, avec des tronçons de longueur variables, établis en fonction de singularités de la voie.
- Les campagnes d'optimisation sont communes à plusieurs véhicules circulant sur la même voie ferrée, les véhicules étant alors propres à mettre en commun les données relatives à chaque campagne d'optimisation.

L'invention concerne également un dispositif de contrôle du confort selon la revendication 7.

Un dispositif selon l'invention peut comporter en outre l'une ou plusieurs des caractéristiques suivantes, prises seules ou selon toutes combinaisons techniquement envisageables.

- Les moyens d'optimisation comportent une base de donnée, propre à être mise à jour à chaque campagne d'optimisation, indiquant des jeux de paramètres en fonction de tronçons de voie, de vitesses et de charges du véhicule.
- Les moyens d'optimisation comportent des moyens de génération de jeux de paramètres optimisés par algorithme métaheuristique, propres à générer un jeu de paramètres optimisés en appliquant un algorithme métaheristique à un jeu de paramètre déterminé au cours d'une campagne d'optimisation précédente.

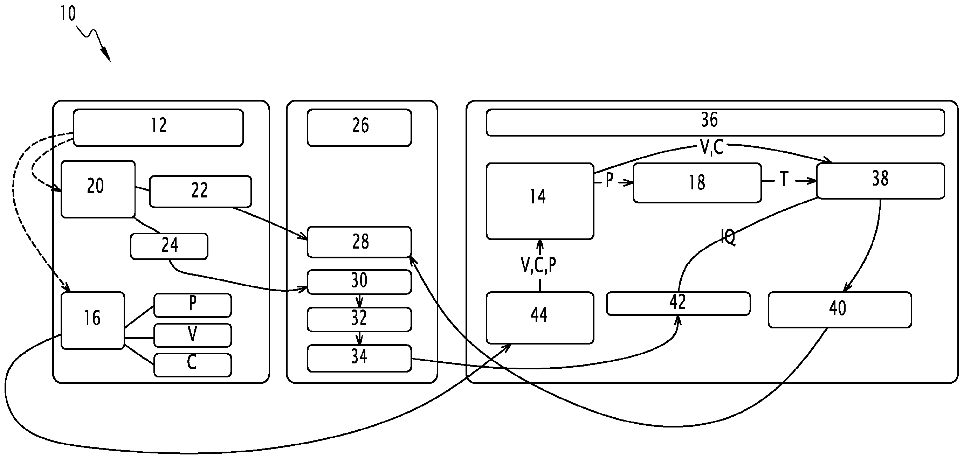

L'invention sera mieux comprise à la lecture de la description qui va suivre, donnée uniquement à titre d'exemple et faite en se référant à la figure unique annexée, représentant schématiquement un dispositif d'optimisation selon un exemple de mode de réalisation de l'invention, et l'interaction entre ses composants pour la mise en œuvre du procédé selon l'invention.

On a représenté sur la figure un dispositif 10 d'optimisation du confort dans un véhicule ferroviaire 12 circulant sur une voie ferrée.

La voie ferrée est préalablement découpée en tronçons successifs. A cet effet, plusieurs méthodes de découpage de la voie ferrée sont envisageables.

Par exemple, on peut simplement découper la voie ferrée en tronçons de longueurs égales.

En variante, on peut prédécouper la voie ferrée en différentes portions de voie, en fonction de la vitesse de circulation maximale sur ces portions de voie, puis découper chaque portion de voie en tronçons avec un pas de découpage constant spécifique à cette portion de voie.

On peut également prévoir un découpage adaptatif, avec des tronçons de longueur variables, établis en fonction des singularités de la voie connues ou détectées lors d'un passage précédent sur la voie. Ainsi, un tronçon avec une singularité nuisant au confort pourra être court, alors qu'un tronçon sans singularité notable peut être long.

La longueur des tronçons peut être quelconque. Toutefois, plus les tronçons sont courts, plus le confort sera optimisé, car s'adaptant plus rapidement aux spécificités de la voie.

Dans tous les cas, le découpage de la voie en tronçons est enregistré dans une base de données 14, qui est de préférence embarquée dans le véhicule 12, ou en variante stockée à distance dans une station de contrôle.

Le véhicule 12 comporte des moyens 16 de détermination de variables d'entrée, ces variables d'entrée étant la position P du véhicule sur la voie, sa vitesse V et sa charge C. Ces variables d'entrée influent sur le confort ressenti par les passagers dans le véhicule 12.

D'autres variables difficilement quantifiables, telles que les sollicitations mécaniques sur les liaisons caisse-bogie, peuvent également influer sur ce confort.

La position P est par exemple déterminée par un dispositif de guidage par satellite (GPS) classique. Cette position P permettra, au moyen d'une table de correspondance 18, de déterminer sur quel tronçon de voie T se trouve le véhicule 12 en fonction de sa position P déterminée par GPS.

La vitesse V est quant à elle déterminée au moyen d'un dispositif de mesure de vitesse classique, tel que ceux classiquement embarqués sur les véhicules ferroviaires.

Enfin, la charge C est mesurée au moyen d'un dispositif classique de mesure de charge.

Le véhicule 12 comporte par ailleurs divers équipements 20, comprenant au moins un système de suspension actif 22.

Le système de suspension 22 est de type « actif », c'est-à-dire que ses caractéristiques, notamment sa raideur d'amortissement, sont réglables, au moyen d'un jeu de paramètres de réglage.

Le système de suspension 22 comporte notamment des amortisseurs actifs, notamment à viscance variable et tarage variable, une barre anti-roulis éventuellement active, avantageusement un leste mobile, des butées de limitation de course actives, etc. Le jeu de paramètres de réglage comprend tous les paramètres influant sur ces éléments constituant le système de suspension 22.

Par exemple, les paramètres comportent des valeurs de viscance d'amortisseurs, des valeurs de tarage d'amortisseurs, des valeurs de raideurs de barre anti-roulis, des courses libres des butées, etc.

Les équipements 20 comportent par ailleurs des capteurs 24, permettant d'estimer le confort dans le véhicule ferroviaire 12. Par exemple, les capteurs 24 comportent des accéléromètres, par exemple mesurant les accélérations dans trois directions de l'espace, notamment longitudinalement, transversalement et en hauteur. En effet, des accélérations trop élevées, par exemple, sont des sources d'inconfort.

Le véhicule 12 comporte également de l'équipement hardware 26 embarqué.

L'équipement hardware 26 comporte des moyens 28 de commande du système de suspension 22. Ces moyens de commande 28 sont propres à appliquer, au système de suspension 22, un jeu de paramètres de réglage préalablement déterminés.

L'équipement hardware 26 comporte par ailleurs une chaîne d'acquisition 30 reliée aux capteurs 24, pour recueillir les valeurs mesurées par ces capteurs 24, des moyens 32 de conditionnement de signaux permettant par exemple le filtrage passe-bas en fréquence des accélérations, et des moyens 34 d'enregistrement tampon des valeurs mesurées par les capteurs en fonction du tronçon T parcouru.

Le dispositif d'optimisation 10 comporte enfin une partie logicielle 36, par exemple installée sur l'équipement hardware 26. Plus particulièrement, le dispositif d'optimisation 10 comporte un système informatique pour la mise en œuvre de la partie logicielle 36.

La partie logicielle 36 comporte un module d'optimisation 44, pour l'optimisation des paramètres de réglage.

Ce module d'optimisation 44 comporte notamment la base de données 14 évoquée précédemment.

Cette base de données 14 comporte la table de correspondance 18, permettant, lorsque les moyens de détermination 16 fournissent la position P du véhicule 12, d'indiquer sur quel tronçon T ce véhicule 12 se trouve.

La base de données 14 comporte également une table de paramètres 38, propre à fournir un jeu de paramètres de réglage en fonction de la plage de vitesse V, de la plage de charge C et du tronçon T.

La partie logicielle 36 comporte par ailleurs des moyens 40 de génération de jeux de paramètres optimisés par algorithme métaheuristique.

La partie logicielle 36 comporte par ailleurs des moyens 42 de calcul d'un indice de qualité de confort IQ, en fonction des données fournies par les moyens d'enregistrement 34.

La présente invention vise à améliorer le confort lié aux mouvements du véhicule résultant notamment des défauts de voies qui transmettent des efforts parasites à travers le système de suspensions du véhicule (ressorts, amortisseurs, barres anti-roulis). L'indice de qualité de confort IQ se calcule à partir des accélérations tridimensionnelles mesurées dans la caisse du véhicule par les capteurs 24, qui sont donc ressenties par les passagers.

Des normes permettent d'évaluer un niveau de confort à partir des mesures d'accélération subies en caisse. Ce niveau de confort est noté Nmv. Plus le niveau de confort Nmv est faible, mieux est le confort perçu.

On décrira ci-dessous un exemple de mode de calcul du niveau de confort Nvm. Ce mode de calcul est normalisé.

L'indice de qualité de confort IQ est construit à partir du niveau de confort Nvm. L'indice de qualité de confort IQ sert à l'évaluation de la qualité d'une configuration du véhicule présentant des amortisseurs actifs pouvant donc être ajustés en raideur (tarage). L'indice de qualité de confort IQ est donc meilleur si sa valeur est élevée.

Le niveau de confort Nmv et l'indice de qualité de confort IQ sont calculés par les étapes de calcul suivantes :

- mesure des accélérations par les capteurs 24, sur le tronçon donné,
- application d'un filtre passe-bas en fréquence des accélérations, par les moyens 32 de conditionnement de signaux. Le filtre passe bas est par exemple du type Wd, selon la norme EN 12299 ;
- Calcul de la valeur moyenne quadratique Rms (Root mean square, également appelée valeur efficace Aeff) :

$$A_{eff} = \sqrt{\frac{1}{T} \int_0^T \left[a(t)^{Wd}\right]^2 dt}$$

Où:

Aeff est la valeur efficace calculée sur une durée T, T est une durée sur laquelle est calculée la moyenne. Par exemple, T = 5 secondes,

$[a(t)^{Wd}]$ est le signal temporel d'accélération qui a été filtré par le filtre « Wd ».

- Choix de valeurs RMS correspondant aux 95ème centiles : Il s'agit de choisir les valeurs d'accélération en x, y et z qui couvrent 95% des niveaux d'accélérations filtrées.
- Calcul du confort Nmv sur le tronçon parcouru:

$$Nmv = 6\sqrt{a_{x95}^{2^{Wd}} + a_{y95}^{2^{Wd}} + a_{z95}^{2^{Wd}}}$$

- Construction de l'Indice de Qualité (du confort) pour les besoins de l'optimisation :
  IQ=1/Nmv²

Où Nmv est le niveau de confort pour un individu donc un jeu de paramètres donné.

Le fonctionnement du dispositif d'optimisation 10 va maintenant être décrit, dans le cadre d'un procédé d'optimisation selon l'invention.

Comme indiqué précédemment, le procédé d'optimisation comporte préalablement le découpage de la voie ferrée en tronçons, et le stockage, dans la base de données 14, des caractéristiques de ces tronçons. Par exemple, les tronçons sont numérotés, et la base de données 14 comporte, pour chaque numéro de tronçon, le kilométrage d'entrée et le kilométrage de sortie de ce tronçon. La position P du véhicule 12, obtenue grâce au système de guidage par satellite, permet donc aisément de connaître le numéro du tronçon sur lequel ce véhicule 12 se trouve.

Pour chaque tronçon T, le procédé comporte des campagnes d'optimisation de jeux de paramètres de réglage. Une « campagne d'optimisation » pour un tronçon T correspond à l'accumulation suffisante de données de confort sur ce tronçon lorsque le train est soumis à différents jeux de paramètres de réglage de suspension, par des circulations sur le tronçon donné pour une plage de vitesse et une plage de charge données.

Au cours de la première campagne d'optimisation, un premier jeu de paramètres de réglage est prédéfini à chaque passage de système de suspension 22 sur le tronçon. Ainsi, au cours de la première campagne d'optimisation, une pluralité de premiers jeux de paramètres est définie.

Chaque premier jeu de paramètres est défini aléatoirement ou arbitrairement. Avantageusement, chaque paramètre du premier jeu est choisi dans un intervalle de sécurité prédéfini. L'homme du métier saura définir cet intervalle de sécurité, en dehors duquel les paramètres ne permettraient pas d'obtenir un confort satisfaisant.

En arrivant sur un tronçon T, le premier jeu de paramètres correspondant est transmis aux moyens de commande 28, qui appliquent ce premier jeu de paramètres au système de suspension 22.

Sur ce tronçon T, la vitesse V et la charge C sont mesurées, puis classées dans un espace discrétisé de vitesse et de charge, ces valeurs discrétisées sont fournies à la base de données 14. Ainsi, la classe de vitesse V, la classe de charge C et le premier jeu de paramètres sont renseignés dans la base de données 14, et notamment dans la table de paramètres 38.

Les moyens de calcul 42 calculent ensuite un indice de qualité de confort IQ, sur la base des mesures fournies par les capteurs 24. Cet indice de qualité de confort IQ dépend du paramétrage du système de suspension 22. Ainsi, l'indice de qualité de confort IQ est également renseigné dans la table de paramètres 38, en y étant associé à ce premier jeu de paramètres et le couple classe de vitesse, classe de charge.

La première campagne d'optimisation est réalisée pour un nombre prédéterminé de passage du système de suspension 22 sur le tronçon T, chacun de ces passages étant associé à un premier jeu de paramètres respectif et de préférence distinct.

Par exemple, lorsque le véhicule ferroviaire 12 circule plusieurs fois sur la voie dans la même journée, la première campagne d'optimisation consiste en l'application d'un premier jeu de paramètre respectif à chaque passage du véhicule 12 sur le tronçon T dans cette journée.

En variante, les campagnes d'optimisation sont communes à plusieurs véhicules 12 circulant sur la même voie ferrée. Les véhicules 12 sont alors propres à mettre en commun les données relatives à chaque campagne. On augmente ainsi la vitesse de l'optimisation, par effet de flotte.

Le procédé comporte ensuite, au cours de cette première campagne d'optimisation, l'application, par les moyens de génération 40, d'un algorithme métaheuristique aux premiers jeux de paramètres, pour déterminer des seconds jeux de paramètres de réglage. Cet algorithme métaheuristique prend en compte les indices de qualité de confort IQ calculés, pour en déduire les paramètres qui semblent les plus adaptés pour améliorer le confort sur le tronçon T. L'homme du métier saura choisir un algorithme métaheuristique adapté.

L'algorithme métaheuristique est par exemple un algorithme génétique. Le principe général d'un algorithme génétique est connu en soi. Partant d'une population initiale, on effectue une évaluation des individus, puis on effectue une optimisation par sélection, croisements et mutations, pour obtenir une nouvelle population optimisée. On effectue ensuite une nouvelle itération à partir de l'évaluation des individus.

Une telle première campagne d'optimisation est réalisée sur chaque triplette tronçon T, classe de vitesse V, classe de charge C.

Il est à noter que le jeu de paramètres à appliquer sur un tronçon T est déterminé alors que le véhicule 12 se trouve sur le tronçon précédent, afin de pouvoir paramétrer le système de suspension 22 dès l'entrée du véhicule 12 sur le tronçon T.

Un exemple d'algorithme métaheuristique, et notamment un algorithme génétique, va maintenant être décrit.

Les algorithmes génétiques sont un type particulier d'algorithmes méta-heuristiques. On appliquera un algorithme génétique en continu pour adapter le véhicule à son environnement, c'est-à-dire pour régler de façon optimale les jeux de paramètres de suspensions de manière à maximiser le confort sur le tronçon considéré.

Une génération est, en pratique, un échantillon suffisamment grand de jeux de paramètres évalués, qui sera la base pour créer un second échantillon de jeux de paramètres à tester. L'optimisation est donc séquentielle. Un échantillon peut donc être physiquement constitué d'un même train qui passe sur un tronçon avec des jeux de paramètres différents, ou de trains identiques ayant des jeux de paramètres différents, c'est le cas d'une flotte de train (TGV par exemple) circulant sur une même ligne. Plus il y a de trains sur une ligne plus la convergence est rapide.

Etape 1 : Choix des paramètres influents sur la réponse du système au problème d'optimisation posé.

Au cours de cette étape 1, on définit les paramètres que l'on souhaite modifier/optimiser. Une étude de sensibilité permet de définir quels amortisseurs jouent le plus sur le confort. On définit la plage de variation des paramètres compatibles avec la sécurité du train.

Etape 2 : Population initiale (aléatoire) de N individus.

On définit la population (ensemble de N jeux de paramètres) comme formant la première génération. La taille N de la population est un choix d'optimisation et n'a pas nécessairement de rapport avec le nombre de train en exploitation. Une population est aussi appelée « génération ». Un individu correspond à un jeu de paramètres à tester. Chaque jeu de paramètres possède des paramètres définis aléatoirement en tenant compte de l'étape 1. Chaque paramètre est codé en nombre réel pour éviter les temps de conversion.

Etape 3 : Évaluation de la capacité d'adaptation de chaque individu (Indice de Qualité)

Chaque individu (jeu de paramètres) est évalué par rapport au problème (chaque train roule sur le tronçon et les accélérations sont enregistrées). On en déduit un indice de qualité IQ.

Plus l'individu est adapté (plus le confort est bon), plus l'indice de qualité sera élevé.

Des pénalités ou des bonus peuvent être appliqués si des valeurs maximales d'Indice de qualité de confort IQ doivent être respectées. Ces jeux de paramètres bonifiés auront plus de chance d'être sélectionnés pour l'étape suivante. Cette opération nous permet ainsi de classer les individus par ordre d'adaptabilité en vue de l'étape suivante.

On passera à l'étape suivante, une fois les N individus de la génération testés et évalués.

Etape 4 : Sélection des parents les mieux adaptés.

On sélectionne ensuite les N individus qui seront utilisés pour la suite. Les individus mis en avant à l'étape 3 ont statistiquement plus de chances d'être sélectionnés selon la Méthode de la roulette qui sera décrite plus bas. On obtient une population intermédiaire composée de N individus (jeux de paramètres) un peu mieux adaptés et donc fournissant de meilleures solutions (meilleurs indices de qualité IQ). Un individu peut être représenté plusieurs fois dans cette population intermédiaire.

Etape 5 : reproduction par croisement.

Le croisement est l'opération qui va permettre l'exploration de l'espace de variation des paramètres. Lors de cette opération, les paramètres des parents sont combinés entre eux de façon à former des descendants possédant des caractéristiques issues des deux parents. Grâce au processus de sélection, au fur et à mesure que l'on avance dans les générations, on croise des individus de plus en plus adaptés. On a donc plus de chance d'obtenir un individu encore meilleur à l'issue du croisement.

Chaque couple d'individus (jeux de paramètres) engendre deux individus enfants (conservation de la taille N des populations dans le temps).

La méthode employée pour les croisements sera décrite ultérieurement.

Etape 6 : Mutation

La mutation est une modification aléatoire (mais selon les bornes définies dans l'étape 1) d'un paramètre afin d'élargir l'espace de recherche et d'éviter une convergence trop rapide vers un optimum, qui risquerait alors d'être un optimum local. Mathématiquement, la mutation garantit que l'optimum global peut être atteint.

Etape 7 : Nouvelle génération

On recommence à partir de l'étape 3 avec cette nouvelle génération de jeux de paramètres obtenue. Il est démontré mathématiquement que l'algorithme converge vers la solution globale. Tous les véhicules auront alors le jeu de paramètres optimal (réglages des amortisseurs) leur permettant de fournir le confort optimal aux voyageurs pour le tronçon donné.

Le problème d'optimisation pouvant évoluer dans le temps (usure des voies, des roues, etc.), la configuration optimale des paramètres peut changer. L'opération de mutation créant des individus « un peu différents » à chaque génération, les nouvelles générations peuvent converger vers le nouvel optimum et donc suivre avec le temps l'évolution de l'environnement (dans la mesure où les variations de l'environnement sont suffisamment lentes pour que l'algorithme converge).

La méthode de la roulette utilisée à l'étape 4 va maintenant être décrite.

Cette méthode consiste à convertir en pourcentage l'indice de qualité IQ de chaque jeu de paramètre, par rapport à la somme totale des indices de qualité IQ. On réalise ensuite N tirages, où N est le nombre de jeux de paramètres composant une génération. À chaque tirage, chaque jeu de paramètres aura donc une probabilité d'être sélectionné proportionnelle à la valeur de son indice de qualité IQ. On remarquera qu'un même « bon » jeu de paramètres pourra être sélectionné plusieurs fois alors qu'un « mauvais » ne jamais l'être.

Cependant, il se peut que l'inverse se produise, c'est-à-dire que le meilleur jeu de paramètres ne soit jamais sélectionné ou qu'il soit perdu lors des croisements ou des mutations. Afin de contrecarrer ce phénomène, il est possible d'envisager qu'après le processus de sélection, le moins bon jeu de paramètres soit remplacé d'office par le meilleur jeu de paramètres de la génération précédente. Il s'agit d'un procédé élitiste

La méthode de croisement employée à l'étape 5 va maintenant être décrite.

On détermine une probabilité de croisement Pc, par exemple Pc=77%.

Pour chaque couple de jeux de paramètres (de chromosomes) pris aléatoirement dans la population intermédiaire résultant de la sélection par la méthode de la roulette, on tire un nombre aléatoire entre 0 et 1, si ce nombre est supérieur à Pc, les deux individus (jeux de paramètres) tirés sont retenus pour un croisement. Pour chaque gène (paramètre amortisseur par exemple), un nombre aléatoire est tiré, si ce nombre dépasse la probabilité p2 définie ci-dessous, alors les deux individus échangent le gène entre eux et on passe au gène suivant.

$$p2 = \left( 0.5 - 0.35 \times \left( \left( \frac{Num\_Généra}{Nb\_Généra} \right)^{\frac{1}{2}} \right) \right) \times F \times 100$$

où :

Num_Généra est l'indice de la génération en cours.
Nb_Généra est le nombre total de génération dans l'algorithme.
F=1.5-(Num_Généra/Nb_Généra) si deux parents satisfont aux contraintes imposées (c'est-à-dire que leurs paramètres se trouvent bien dans les intervalles prédéfinis), F=1 sinon.

Une fois la première campagne d'optimisation terminée, on réalise une seconde campagne d'optimisation, au cours de laquelle ce sont les seconds jeux de paramètres déterminés précédemment avec les évaluations des IQ de la première campagne, qui sont fournis aux moyens de commande 28, chaque second jeu de paramètres correspondant à un passage respectif sur un tronçon T donné, ce second jeu de paramètres étant utilisé pour régler le système de suspension 22 lors de ce passage sur le tronçon T.

Une telle seconde campagne est également réalisée pour chaque triplette tronçon T, classe de vitesse V, classe de charge C de la voie.

De la même manière que précédemment, en arrivant sur un tronçon T, le second jeu de paramètres correspondant est transmis aux moyens de commande 28, qui appliquent ce second jeu de paramètres au système de suspension 22.

Sur ce tronçon T, la vitesse V et la charge C sont mesurées, puis fournies à la base de données 14. Ainsi, la vitesse V (sa classe de vitesse), la charge C (sa classe de charge) et le second jeu de paramètres sont renseignés dans la base de données 14, et notamment dans la table de paramètres 38.

Les moyens de calcul 42 calculent ensuite l'indice de qualité de confort IQ, sur la base des mesures fournies par les capteurs 24. L'indice de qualité de confort IQ est également renseigné dans la table de paramètres 38, en y étant associé à ce second jeu de paramètres.

La seconde campagne d'optimisation est réalisée pour un nombre prédéterminé de passage du système de suspension 22 sur le tronçon T, chacun de ces passages étant associé à un second jeu de paramètres respectif et de préférence distinct.

Par exemple, lorsque le véhicule ferroviaire 12 circule plusieurs fois sur la voie dans la même journée, la seconde campagne d'optimisation consiste en l'application d'un second jeu de paramètre respectif à chaque passage du véhicule 12 sur le tronçon T dans cette journée.

Le procédé comporte ensuite, au cours de cette seconde campagne d'optimisation, l'application, par les moyens de génération 40, de l'algorithme métaheuristique aux seconds jeux de paramètres, pour déterminer des troisième jeux de paramètres de réglage.

Puis, au cours de chaque campagne d'optimisation suivante, à chaque passage du système de suspension 22 sur le tronçon T, l'un des jeux de paramètres de réglage déterminés par la campagne d'optimisation précédente est appliqué au système de suspension 22 et l'indice de qualité de confort IQ est estimé. Puis, l'algorithme métaheuristique est appliqué pour déterminer de nouveaux jeux de paramètres de réglage.

En réitérant les campagnes d'optimisation, les jeux de paramètres convergent vers des valeurs optimisées.

On constitue ainsi en continu une base de données de paramètres optimaux, en fonction des variables d'entrées considérées.

Il est à noter que l'algorithme métaheuristique prend avantageusement en compte la vitesse du véhicule 12 et la charge portée par ce véhicule 12 lors du passage de ce véhicule 12 sur un tronçon T considéré.

Il est à noter que l'espace de recherche d'optimum est composé de 3 axes : l'axe Tronçon, l'axe Vitesse V et l'axe charge C. Afin de structurer l'optimisation, on discrétise l'espace sur ces 3 axes par des classes. On peut visualiser cet espace par des cubes, chaque cube contenant les informations d'optimisation que sont les jeux de paramètres et les IQ associés.

Il apparaît clairement que l'invention, en utilisant un algorithme métaheuristique, permet de réaliser des optimisations multi-critères dynamiques. Ainsi, un jeu de paramètres proches d'un optimum sera toujours proposé, notamment grâce au mécanisme de « mutation » inclus dans le principe général connu d'optimisation par algorithme génétique. La pertinence du jeu de paramètres proposé s'affine au fur et à mesure des campagnes d'optimisation, malgré la variabilité du système comme par exemple le vieillissement des voies correspondant à des évolutions de géométrie. L'algorithme fonctionnant en permanence, l'algorithme permet de suivre ces évolutions de qualité de voie et propose toujours des jeux de paramètres très proches de l'optimum.

On notera que l'invention n'est pas limitée au mode de réalisation précédemment décrit, mais pourrait présenter diverses variantes dans le domaine défini par la portée des revendications jointes.

**Revendications**

1. Procédé d'optimisation du confort dans un véhicule ferroviaire (12) d'une flotte de véhicules ferroviaires circulant sur une même voie ferrée, le véhicule ferroviaire comportant au moins un système actif de suspension (22) paramétré par un jeu de paramètres de réglage, **caractérisé en ce que** :

 - chaque véhicule de la flotte comporte des capteurs d'accélérations tridimensionnelles (24),
 - la voie ferrée est découpée en tronçons (T),
 - pour chaque tronçon (T), le procédé comporte des campagnes d'optimisation du jeu de paramètres de réglage, telles que :

 • au cours de la première campagne d'optimisation, à chaque passage du système de suspension (22) sur le tronçon (T), un premier jeu de paramètres de réglage, spécifique à ce passage, est prédéfini et appliqué au système de suspension (22), et un indice de qualité de confort (IQ) est calculé à partir d'accélérations tridimensionnelles mesurées par les capteurs (24), puis un algorithme métaheuristique est appliqué pour déterminer des seconds jeux de paramètres de réglage,
 • au cours de chaque campagne d'optimisation suivante, à chaque passage du système de suspension sur le tronçon (T)l'un des jeux de paramètres de réglage déterminés par la campagne d'optimisation précédente est appliqué au système de suspension et l'indice de qualité de confort est calculé, puis l'algorithme métaheuristique est appliqué pour déterminer de nouveaux jeux de paramètres de réglage, l'algorithme métaheuristique prenant en compte les indices de qualité de confort (IQ) calculés, pour en déduire les paramètres qui semblent les plus adaptés pour améliorer le confort sur le tronçon (T), et

• chaque campagne d'optimisation est commune à plusieurs véhicules de la flotte de véhicules circulant sur la même voie, les données relatives à chaque campagne d'optimisation étant mises en commun.

2. Procédé d'optimisation du confort selon la revendication 1, dans lequel les paramètres des premiers jeux de paramètres sont choisis dans des intervalles de sécurité respectifs prédéterminés.

3. Procédé d'optimisation du confort selon la revendication 1 ou 2, dans lequel les paramètres des premiers jeux de paramètres sont déterminés aléatoirement.

4. Procédé d'optimisation du confort selon l'une quelconque des revendications précédentes, dans lequel l'algorithme métaheuristique est un algorithme génétique.

5. Procédé d'optimisation du confort selon l'une quelconque des revendications précédentes, dans lequel le découpage de la voie ferrée en tronçons (T) est adaptatif, avec des tronçons (T) de longueur variables, établis en fonction de singularités de la voie.

6. Procédé d'optimisation du confort selon l'une quelconque des revendications précédentes, dans lequel les campagnes d'optimisation sont communes à plusieurs véhicules (12) circulant sur la même voie ferrée, les véhicules (12) étant alors propres à mettre en commun les données relatives à chaque campagne d'optimisation.

7. Dispositif de contrôle du confort dans un véhicule ferroviaire (12) d'une flotte de véhicules ferroviaires circulant sur une même voie ferrée, le dispositif comportant une partie logiciel (36) pour la mise en oeuvre du procédé d'optimisation du confort selon l'une quelconque des revendications précédentes, le dispositif comportant en outre:

- des capteurs d'accélérations tridimensionnelles (24) pour chaque véhicule de la flotte,

- au moins un système actif de suspension (22), réglable au moyen d'un jeu de paramètres,
- un système (28) de commande du jeu de paramètres du système de suspension (22),
- des moyens (42) d'évaluation du confort dans le véhicule ferroviaire (12), et
- des moyens (44) d'optimisation propres à déterminer des jeux de paramètres optimisés en effectuant une pluralité de campagnes d'optimisation.

8. Dispositif de contrôle du confort selon la revendication 7, dans lequel les moyens d'optimisation (44) comportent une base de donnée, propre à être mise à jour à chaque campagne d'optimisation, indiquant des jeux de paramètres en fonction de tronçons de voie (T), de vitesses (V) et de charges (C) du véhicule (12).

9. Dispositif de contrôle du confort selon la revendication 7 ou 8, dans lequel les moyens d'optimisation (44) comportent des moyens (40) de génération de jeux de paramètres optimisés par algorithme métaheuristique, propres à générer un jeu de paramètres optimisés en appliquant un algorithme métaheuristique à un jeu de paramètre déterminé au cours d'une campagne d'optimisation précédente.

**Patentansprüche**

1. Verfahren zur Optimierung des Komforts in einem Schienenfahrzeug (12) von einer Flotte von Schienenfahrzeugen, welche auf einem gleichen Eisenbahngleis fahren, wobei das Schienenfahrzeug zumindest ein aktives Aufhängungssystem (22) aufweist, welches mittels eines Satzes an Regelungsparametern parametrisiert ist, **gekennzeichnet dadurch, dass**:

- jedes Fahrzeug der Flotte Sensoren für dreidimensionale Beschleunigungen (24) aufweist,
- das Eisenbahngleis in Abschnitte (T) aufgeteilt ist,
- das Verfahren für jeden Abschnitt (T) Kampagnen zur Optimierung des Satzes an Regelungsparametern aufweist, sodass:

• im Lauf der ersten Kampagne zur Optimierung bei jedem Durchgang des Aufhängungssystems (22) am Abschnitt (T) ein erster Satz an Regelungsparametern, welcher für diesen Durchgang spezifisch ist, vordefiniert ist und auf das Aufhängungssystem (22) angewendet wird und ein Komfortqualität-Index (IQ) berechnet wird ausgehend von dreidimensionalen Beschleunigungen, welche mittels der Sensoren (24) gemessen werden, und dann ein metaheuristischer Algorithmus angewendet wird, um zweite Sätze an Regelungsparametern zu ermitteln,

• im Lauf jeder folgenden Kampagne zur Optimierung bei jedem Durchgang des Aufhängungssystems am Abschnitt (T) der eine der Sätze an Regelungsparametern, welche mittels der vorherigen Kampagne zur Optimierung ermittelt wurden, auf das Aufhängungssystem angewendet wird und der Komfortqualität-Index berechnet wird und dann der metaheuristische Algorithmus angewendet wird, um neue Sätze an Regelungsparametern zu ermitteln, wobei der metaheuristische Algorithmus die berechneten Komfortqualität-Indizes (IQ) berücksichtigt, um daraus die Parameter abzuleiten, welche am meisten angepasst erscheinen, um den Komfort am Abschnitt (T) zu verbessern, und

• jede Kampagne zur Optimierung mehreren Fahrzeugen der Flotte an Fahrzeugen, welche auf demselben Gleis fahren, gemeinsam ist, wobei die Daten, welche jede Kampagne zur Optimierung betreffen, gemeinsam genommen werden.

2. Verfahren zur Optimierung des Komforts gemäß Anspruch 1, wobei die Parameter des ersten Satzes an Parametern in jeweiligen vorbestimmten Sicherheitsintervallen ausgewählt werden.

3. Verfahren zur Optimierung des Komforts gemäß Anspruch 1 oder 2, wobei die Parameter des ersten Satzes an Parametern zufällig ermittelt werden.

4. Verfahren zur Optimierung des Komforts gemäß irgendeinem der vorherigen Ansprüche, wobei der metaheuristische Algorithmus ein genetischer Algorithmus ist.

5. Verfahren zur Optimierung des Komforts gemäß irgendeinem der vorherigen Ansprüche, wobei die Aufteilung des Eisenbahngleises in Abschnitte (T) adaptiv ist, wobei Abschnitte (T) mit variabler Länge in Abhängigkeit von Singularitäten des Gleises festgelegt werden.

6. Verfahren zur Optimierung des Komforts gemäß irgendeinem der vorherigen Ansprüche, wobei die Kampagnen zur Optimierung des Komforts mehreren Fahrzeugen (12), welche auf demselben Eisenbahngleis fahren, gemeinsam sind, wobei die Fahrzeuge (12) daher imstande sind, die Daten, welche jede Kampagne zur Optimierung betreffen, gemeinsam zu nehmen.

7. Vorrichtung zur Steuerung des Komforts in einem Schienenfahrzeug (12) von einer Flotte von Schienenfahrzeugen, welche auf einem gleichen Eisenbahngleis fahren, wobei die Vorrichtung einen Logikabschnitt (36) aufweist für das Durchführen des Verfahrens zur Optimierung des Komforts gemäß irgendeinem der vorherigen Ansprüche, wobei die Vorrichtung ferner aufweist:

- Sensoren für dreidimensionale Beschleunigungen (24) für jedes Fahrzeug der Flotte,
- zumindest ein aktives Aufhängungssystem (22), welche mittels eines Satzes an Parametern regelbar ist,
- ein System (28) zum Steuern des Satzes an Parametern des Aufhängungssystems (22),
- Mittel (42) zum Evaluieren des Komforts im Schienenfahrzeug (12) und
- Mittel (44) zur Optimierung, welche imstande sind, Sätze an Parametern zu ermitteln, welche unter Durchführung von einer Mehrzahl an Kampagnen zur Optimierung optimiert werden.

8. Vorrichtung zur Steuerung des Komforts gemäß Anspruch 7, wobei die Mittel zur Optimierung (44) eine Datenbank aufweisen, welche imstande ist, bei jeder Kampagne zur Optimierung aktualisiert zu werden, und welche Sätze an Parametern in Abhängigkeit von Gleisabschnitten (T), Geschwindigkeiten (V) und Lasten (C) des Fahrzeugs (12) angibt.

9. Vorrichtung zur Steuerung des Komforts gemäß Anspruch 7 oder 8, wobei die Mittel zur Optimierung (44) Mittel (40) zur Erzeugung von Sätzen an Parametern, welche mittels eines metaheuristischen Algorithmus optimiert sind, aufweisen, welche imstande sind, einen Satz an Parametern zu erzeugen, welche unter Anwendung eines metaheuristischen Algorithmus auf einen Parameter-Satz, welcher im Lauf einer vorherigen Kampagne zur Optimierung ermittelt wurde, optimiert werden.

**Claims**

1. A method for optimizing the comfort in a railway vehicle (12) of a fleet of railway vehicles circulating on a same railway track, the railway vehicle including at least one active suspension system (22) parameterized by a set of adjustment parameters, **characterized in that**:

- each vehicle of the fleet comprises tridimensional acceleration sensors (24),
- the railway track is cut out in segments (T),
- for each segment (T), the method includes campaigns for optimization of the set of adjustment parameters, such that:

• during the first optimization campaign, at each passage of the suspension system (22) on the segment (T), a first set of adjustment parameters, specific to this passage, is predefined and applied to the suspension system (22), and a comfort quality index (IQ) is calculated on the basis of tridimensional accelerations measured by the sensors (24), and then a metaheuristic algorithm is applied for determining second set of adjustment parameters,

• during each following optimization campaign, at each passage of the suspension system over the segment (T), one of the sets of adjustment parameters determined by the previous optimization campaign is applied to the suspension system and the comfort quality index is calculated, and then the metaheuristic algorithm is applied for determining new sets of adjustment parameters, the metaheuristic algorithm taking into account the calculated comfort quality indexes (IQ), to deduce parameters that seems the most appropriate to improve the comfort on the segment (T), and

• each optimization campaign is common to several vehicles of the fleet of vehicles circulating on the same track, the data relative to each optimization campaign being shared in common.

2. The comfort optimization method according to claim 1, wherein the parameters of the first sets of parameters are selected in predetermined respective safety intervals.

3. The comfort optimization method according to claim 1 or 2, wherein the parameters of the first sets of parameters are determined randomly.

4. The comfort optimization method according to any of the preceding claims, wherein the metaheuristic algorithm is a genetic algorithm.

5. The comfort optimization method according to any of the preceding claims, wherein the cutting out of the railway track in segments (T) is adaptative, with segments (T) of variable lengths, established according to singularities of the track.

6. The comfort optimization method according to any of the preceding claims, wherein the optimization campaigns are common to several vehicles (12) circulating on the same railway track, the vehicles (12) then being able to put the data relative to each optimization campaign in common.

7. A comfort control device in a railway vehicle (12) of a fleet of railway vehicles circulating on a same railway track, the device including a software part (36) for applying the comfort optimization method according to any of preceding claims, the device also comprising:

- tridimensional acceleration sensors (24) for each vehicle of the fleet,
- at least one active suspension system (22), adjustable by means of a set of parameters,
- a system (28) for controlling the set of parameters of the suspension system (22),
- means (42) for evaluating the comfort in the railway vehicle (12), and
- optimization means (44) able to determine optimized sets of parameters by carrying out a plurality of optimization campaigns.

8. The comfort control device according to claim 7, wherein the optimization means (44) include a database, able to be updated at each optimization campaign, indicating the set of parameters according to track segments (T), speeds (V) and loads (C) of the vehicle (12).

9. The comfort control device according to claim 7 or 8, wherein the optimization means (44) include means (40) for generating optimized sets of parameters by a metaheuristic algorithm, able to generate a set of optimized parameters by applying a metaheuristic algorithm to a set of parameters determined during a previous optimization campaign.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2003237573 A